# EUROPEAN PATENT APPLICATION

(11) **EP 1 378 424 A2**
(43) Date of publication of application: **07.01.2004**
(21) Application number: 03012221.2
(22) Date of filing: 06.06.2003
(51) Int. Cl.: B62D 33/02

(54) **Detachable stake for supporting the canopy of trucks, trailers and the like**

(30) Priority: 03.07.2002 IT BO20020428
(71) Applicant: Pastore & Lombardi S.r.l., 40057 Cadriano di Granarolo Emilia (Bologna) (IT)
(72) Inventor: Hilbe, Riccardo, 40125 Bologna (IT)
(74) Representative: Modiano, Guido, Dr.-Ing.

(57) **Abstract**

A detachable supporting stake for the canopy of trucks, trailers or the like, of the type that hangs in an upward region from the supporting structure of the body and is provided in a downward region with a manual fixing device (2) of the type with a bolt (3) that can slide and is adapted to engage in a respective pocket (4) that protrudes from the base of the body, the stake being constituted by a profiled element made of metallic material whose transverse cross-section has a low thickness and is substantially shaped like a letter C in which the back (5) is exposed and forms a central recessed stiffening band (6) and the front (7) extends, at its lateral ends, with opposite wings (8) against the base of said body.

## Description

The present invention relates to a detachable stake for supporting the canopy of trucks, trailers or the like.

The canopy for covering the body of trucks, trailers or other similar heavy goods vehicles is usually fixed to a supporting structure that extends vertically from the base of the body and is substantially constituted by supporting cross-members and longitudinal members.

To allow better and more stable fixing of the canopy and to ensure that the goods stored in the body are not subjected to uncontrolled lateral movements, a plurality of stakes are usually fixed along the side walls of the body, hang from the longitudinal members of the supporting structure and are locked in a downward region to the chassis of the vehicle.

Among the various kinds of stakes, the ones provided with a device for fixing to the base of the body provided with a sliding bolt, adapted to engage within a respective pocket that protrudes from the chassis, are widely used. The stakes are usually obtained from profiled elements made of thick metallic material, which causes their weight to be excessive; accordingly, maneuverability during the loading and unloading of the body is rather limited.

Moreover, conventional stakes are provided at the front with openings and slots to allow access to manual actuation means (for example lever systems or buttons) of the fixing device, which are suitable to engage and disengage the bolt within the respective pocket: these openings are often very large and facilitate the internal penetration of dirt and also interrupt the continuity of the profiled element, reducing its strength.

The aim of the present invention is to obviate the cited shortcomings by providing a stake that has a low weight and is very rigid and strong.

Within this aim, an object of the present invention is to provide a stake whose front surface is substantially continuous and has no excessively large openings.

Another object of the present invention is to provide a structure that is simple, relatively easy to provide in practice, safe in use, effective in operation, and at relatively low cost.

This aim and these and other objects are all achieved by the present detachable supporting stake for the canopy of trucks, trailers or the like, of the type that hangs in an upward region from the supporting structure of the body and is provided in a downward region with a manual fixing device of the type with a bolt that can slide and is adapted to engage in a respective pocket that protrudes from the base of said body, characterized in that it is constituted by a profiled element made of metallic material whose transverse cross-section has a low thickness and is substantially shaped like a letter C in which the back is exposed and forms a central recessed stiffening band and the front extends, at its lateral ends, with opposite wings against said base of said body.

Further features of the invention will become better apparent from the detailed description of a preferred but not exclusive embodiment of a detachable stake for supporting the canopy of trucks, trailers or the like according to the invention, illustrated by way of non-limitative example in the accompanying drawings, wherein:
Figure 1 is a perspective view of the stake fixed to the supporting structure of the body, with the bolt engaged in the respective pocket;
Figure 2 is a partially sectional detail side elevation view of the stake fixed to the supporting structure of the body;
Figure 3 is a transverse sectional view of the stake.

With reference to the figures, the reference numeral 1 generally designates a detachable stake for supporting the canopy of trucks, trailers or the like according to the invention.

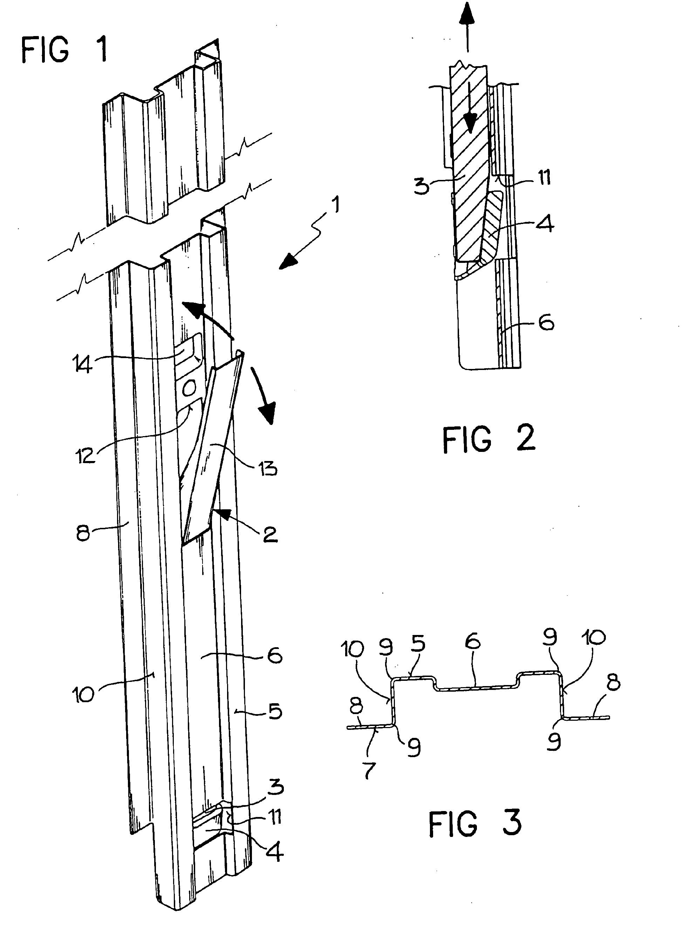

The stake is of the type that hangs in an upward region from the supporting structure of the body and can preferably slide, for example by means of wheels, along a longitudinal guide that is formed on a respective longitudinal member; the stake is provided with a device 2 for manual fixing to the base of the body. The fixing device 2, associated with the lower portion of the stake and contained in the specific case in an enclosure that is closed at the rear, is provided with a bolt 3 that can slide vertically and is adapted to engage in a respective pocket 4 that protrudes from the chassis (see Figures 1 and 2).

According to the invention, the stake is constituted by a profiled element made of metallic material whose transverse cross-section is thin and shaped substantially like a letter C: the respective exposed back 5 of said transverse cross-section forms a central stiffening band 6, and its front 7 extends at its lateral ends with opposite wings 8.

The cross-section of the profiled element has corners 9 that are folded substantially at right angles and form sides 10 that are perpendicular to the central band 6; the cross-section is also preferably flattened, with the wings 8 parallel to the central band 6.

In the lower portion of the profiled element, at the central band 6, there is a substantially rectangular opening 11, which when the stake is coupled to the base of the body allows the pocket 4 to protrude partially from the plane on which the central band lies: this prevents the stake from being able to slide upward once it has been engaged with the body.

The back 5 of the profiled element is further affected, at the central band 6, by a longitudinal slot 12 for accessing a lever 13 for the manual actuation of the device 2 for fixing the stake to the tilt-down side wall. The lever 13 is articulated between an upper position for the engagement of the bolt 3 in the pocket 4, in which it is substantially parallel to the axis of the stake, and a lower position for the disengagement of the bolt 3 from the pocket 4, in which it is substantially perpendicular to the axis of the stake.

On the back 5 of the profiled element, at the central band 6 and above the slot 12, there is a recess 14 that allows to insert one's fingers between the lever 13 and the stake in order to rotate said lever 13 from the upper position to the lower position, thus disengaging the bolt 3 from the pocket 4.

Preferably, along the sides 10 of the stake there are distributed receptacles for the respective opposite ends of cross-members for connecting two adjacent stakes provided on a same side of the body: said receptacles can be constituted for example by brackets or by welded metal plates folded substantially in a U-like shape and open upward.

The method of use of the stake according to the invention is as follows. When the loading of the body is complete, the stake, anchored in an upward region to the supporting structure of the body and able to slide longitudinally, is placed at one of the pockets 4 of the chassis, with the lever 13 in the lower position. The pocket is therefore inserted in the opening 11: by turning the lever 13 manually from the lower position to the upper position, the bolt 3 engages in the pocket 4, stably fixing the stake to the body.

It is noted that the lever 13, in the upper position, arranges itself substantially co-planar to the central band 6 of the profiled element, thus closing the slot 12 completely: this limits the penetration of dirt and produces a compact configuration.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. BO2002A000428 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A detachable supporting stake for the canopy of trucks, trailers or the like, of the type that hangs in an upward region from the supporting structure of the body and is provided in a downward region with a manual fixing device (2) of the type with a bolt (3) that can slide and is adapted to engage in a respective pocket (4) that protrudes from the base of said body, **characterized in that** it is constituted by a profiled element made of metallic material whose transverse cross-section has a low thickness and is substantially shaped like a letter C in which the back (5) is exposed and forms a central recessed stiffening band (6) and the front (7) extends, at its lateral ends, with opposite wings (8) against said base of said body.

2. The stake according to claim 1, **characterized in that** said back (5) of said profiled element is affected, at said central band (6), by a lower opening (11) in which it is possible to insert said pocket (4) when the stake is engaged with said body, said pocket (4) protruding partially from said opening (11) and protruding from the plane on which said central band (6) lies, so as to prevent, by engagement of said central band (6) on said pocket, the upward extraction of said stake.

3. The stake according to claims 1 and 2, **characterized in that** said back (5) is affected, at said central band (6), by a longitudinal slot (12) for accessing a lever (13) for the manual actuation of said fixing device (2), which is articulated between an upper position for the engagement of said bolt (3) in said pocket (4), in which it is substantially parallel to the axis of said stake, and a lower position for the disengagement of said bolt from said pocket, in which it is substantially perpendicular to said stake.

4. The stake according to claim 1, **characterized in that** said transverse cross-section of said profiled element has comers arranged substantially at right angles.

5. The stake according to one or more of the preceding claims, **characterized in that** on said back (5), at said central band (6) and above said slot (12), there is a recess (14) that allows the insertion of one's fingers between said lever (13) and said back (5) in order to turn said lever (13) from said upper position to said lower position, disengaging said bolt (3) from said pocket (4).
